# FASCICULE DE BREVET EUROPEEN

(11) **EP 3 801 963 B1**
(45) Date de publication et mention de la délivrance du brevet: **29.06.2022**
(21) Numéro de dépôt: 19737180.0
(22) Date de dépôt: 29.05.2019
(51) Int. Cl.: B23D 45/12, B23D 47/04, B23D 47/06, B23D 47/08, B23D 45/00, B21D 53/30

(54) **POSTE DE SCIAGE AUTOMATISÉ DE JANTES DE ROUE POUR BICYCLETTE**
STATION ZUM AUTOMATISIERTEN SÄGEN VON RADFELGEN FÜR FAHRRÄDER
AUTOMATED SAWING STATION OF WHEEL WHEELS FOR BICYCLE

(30) Priorité: 31.05.2018 FR 1854713
(43) Date de publication de la demande: 14.04.2021
(73) Titulaire: NCM1, 42390 Villars (FR)
(72) Inventeur: COMBE, Robert, 42450 Sury le Comtal (FR)
(74) Mandataire: Jacobacci Coralis Harle
(86) Numéro de dépôt international: PCT/FR2019/051279
(87) Numéro de publication internationale: WO 2019/229391

(56) Documents cités:
- EP-A2- 0 285 423
- DE-B3-102006 054 929
- FR-A- 492 671

## Description

### DOMAINE TECHNIQUE AUQUEL SE RAPPORTE L'INVENTION

La présente invention concerne un poste de sciage automatisé de tronçons de jante de roue, à partir d'une section métallique extrudée et profilée, comportant une pluralité d'enroulements sous forme de spires alignées. La présente invention concerne plus particulièrement un poste de sciage automatisé de tronçons de jante de roue pour bicyclette. La présente invention concerne également un procédé de sciage apte à être mis en œuvre par le poste de sciage automatisé. L'invention concerne aussi deux procédés de sciage de jantes de roue pour la mise en œuvre d'un tel poste de sciage automatisé.

### ARRIERE-PLAN TECHNOLOGIQUE

FR 492 671 A divulgue un poste de sciage de jantes de roue, en particulier de jantes de roues de vélo comprenant un support étant apte à maintenir une section métallique extrudée et profilée, comportant une pluralité d'enroulements sous forme de spires alignées selon un axe principal et des moyens de sciage aptes à scier la section métallique; et des moyens de déplacement des moyens de sciage, selon une direction perpendiculaire ou sensiblement perpendiculaire à l'axe principal, entre une position de repos, dans laquelle les moyens de sciage sont en retrait des spires; et une position de travail, dans laquelle les moyens de sciage sont présents dans une spire.

De façon connue, les jantes de roue pour bicyclette sont réalisées à partir de sections métalliques extrudées et profilées en forme de « U ». Chaque section métallique est cintrée en forme de «C» afin de former une pluralité d'enroulements comprenant des spires adjacentes et alignées. Cette pluralité d'enroulements est ensuite placée dans une bande de serrage ou feuillard, afin d'assurer son maintien lors d'une étape de sciage. Le sciage est réalisé au niveau d'un côté de la section métallique, parallèlement à l'axe d'alignement de ses spires, de sorte à obtenir une pluralité de tronçons. Les extrémités de chaque tronçon sont par la suite liées ensemble, pour former une jante de roue pour bicyclette.

Par commodité, le sciage de la section métallique est réalisé à l'aide d'une scie circulaire, dont le fil de la lame se déplace radialement ou sensiblement radialement par rapport à l'axe d'alignement des spires. Le mouvement de la lame est réversible pour permettre d'une part, le sciage de la section métallique, et d'autre part le dégagement de la lame de ladite section. Lors du retrait de la lame, la bande de serrage et/ou la scie circulaire sont susceptibles de se déplacer légèrement, entrainant des impacts de la lame sur les faces sciées des tronçons. Ces impacts endommagent de façon aléatoire le profil des coupes ainsi réalisées, empêchant par la suite un ajustement parfait entre les extrémités des tronçons pour former des jantes de roue pour bicyclette.

La présente invention vise à résoudre ce problème, en proposant un poste de sciage automatisé ainsi qu'un procédé de sciage mis en œuvre par ledit poste, permettant d'obtenir à partir d'une section métallique extrudée et profilée, comportant une pluralité d'enroulements sous forme de spires alignées, des tronçons de jante dont les faces sciées présentent une coupe plus nette.

### OBJET DE L'INVENTION

Pour cela, la présente invention propose un poste de sciage automatisé de jantes de roue, comprenant :
- une bande de serrage cintrée en forme de «C» autour d'un axe principal A-A', de sorte que les bords opposés de la bande de serrage délimitent un entrefer, la bande de serrage étant apte à maintenir une section métallique extrudée et profilée, comportant une pluralité d'enroulements sous forme de spires alignées selon l'axe principal A-A' ; et
- des moyens de déplacement de la bande de serrage, le long d'une trajectoire parallèle à l'axe principal A-A', entre une position initiale et une position finale ; et
- des moyens de sciage apte à scier la section métallique ; et
- des moyens de déplacement des moyens de sciage, selon une direction perpendiculaire ou sensiblement perpendiculaire à l'axe principal A-A' ; entre :
   ∘ une position de repos, dans laquelle les moyens de sciage sont en retrait de la trajectoire de l'entrefer; et
   ∘ une position de travail, dans laquelle les moyens de sciage sont présents entre la position initiale et la position finale de la bande de serrage, et présents sur la trajectoire de l'entrefer ; et
- une unité de commande configurée pour piloter les moyens de déplacement et les moyens de sciage, de sorte à permettre :
   ▪ le positionnement de la bande de serrage en position initiale ;
   ▪ le positionnement des moyens de sciage en position de repos ;
   ▪ le déplacement de la bande de serrage de sa position initiale à sa position finale ;
   ▪ le déplacement en position de travail des moyens de sciage ;
   ▪ le déplacement de la bande de serrage de sa position finale à sa position initiale.

En d'autres termes, un poste de sciage automatisé selon l'invention est apte à déplacer de façon réversible et synchronisée, la bande de serrage et les moyens de sciage. L'unité de commande est configurée pour placer en retrait les moyens de sciage (position de repos), lorsque la bande de serrage ou feuillard se déplace de sa position initiale à sa position finale, de sorte que les moyens de sciage ne soient pas positionnés sur le passage de la bande de serrage. À l'inverse, l'unité de commande est paramétrée pour positionner les moyens de sciage sur le passage de la bande de serrage (position de travail), lors de son déplacement de sa position finale à sa position initiale, de sorte qu'au moins une partie des moyens de sciage passe entre les bords opposés de la bande de serrage délimitant l'entrefer. Ainsi, de façon avantageuse, lorsque la bande de serrage effectue un aller-retour entre sa position initiale et sa position finale, l'invention permet de positionner une seule et unique fois les moyens de sciage au niveau de l'entrefer de la bande de serrage. De ce fait, les moyens de sciage passent une seule et unique fois par l'entrefer pour scier une section métallique maintenue par la bande de serrage. La coupe des tronçons sciés n'est donc plus susceptible d'être modifiée, lors d'un second passage des moyens de sciage à travers ladite section métallique. Un poste de sciage automatisé selon l'invention permet ainsi le sciage de plusieurs tronçons de jantes de roue, de préférence pour bicyclette, dont les faces sciées sont plus nettes par rapport à l'état de la technique.

Selon une variante de réalisation de l'invention, le poste de sciage automatisé comprend des moyens de brossage et des moyens de déplacement des moyens de brossage qui sont pilotés par l'unité de commande, les moyens de déplacement étant aptes à déplacer les moyens de brossage selon une direction perpendiculaire ou sensiblement perpendiculaire à l'axe principal A-A', entre :
∘ une position de repos, dans laquelle les moyens de brossage sont en retrait de la trajectoire de l'entrefer ; et
∘ une position de travail, dans laquelle les moyens de brossage sont présents entre la position initiale et la position finale de la bande de serrage, et présents sur la trajectoire de l'entrefer.

En d'autres termes, en position de travail, au moins une partie des moyens de brossage est présente au niveau de l'entrefer délimité par les bords de la bande de serrage, de sorte à permettre aux moyens de brossage de brosser les faces sciées des tronçons lors du déplacement de la bande de serrage. De façon avantageuse, l'invention permet de placer les moyens de brossage en position de repos, afin de ne pas entraver le déplacement de la bande de serrage entre sa position initiale et sa position finale. Les moyens de brossage sont placés au plus près des moyens de sciage, de sorte à pouvoir réaliser les étapes de sciage et de brossage sur un même poste de travail de faible encombrement. Le temps nécessaire pour effectuer ces opérations est donc réduit. Selon un autre avantage, on évite la mise en œuvre d'opérations supplémentaires de reprise ou de finition des bords sciés.

Selon une autre variante de réalisation de l'invention, l'unité de commande est configurée pour synchroniser le fonctionnement des moyens de brossage et des moyens de déplacement des moyens de brossage, de sorte à permettre :
▪ le positionnement de la bande de serrage en position initiale ;
▪ le positionnement des moyens de brossage en position de repos ;
▪ le déplacement de la bande de serrage de sa position initiale à sa position finale ;
▪ le déplacement en position de travail des moyens de brossage ;
▪ le déplacement de la bande de serrage de sa position finale à sa position initiale.

Selon une autre variante de réalisation de l'invention, l'unité de commande est configurée pour ralentir la vitesse de déplacement de la bande de serrage, lorsque les moyens de sciage scient les faces extérieures d'une section métallique maintenue par ladite bande de serrage. Par les termes « faces extérieures », on entend les faces délimitant la section métallique qui sont normales ou sensiblement normales à l'axe principal A-A'.

Selon une autre variante de réalisation de l'invention, l'unité de commande est configurée pour accélérer la vitesse de déplacement de la bande de serrage, lorsque les moyens de sciage scient une section métallique, maintenue par ladite bande de serrage, entre les faces extérieures de ladite section. Autrement dit, l'unité de commande contrôle la vitesse de déplacement de la bande de serrage, de sorte que sa vitesse soit plus grande lorsque les moyens de sciage scient le milieu de la section métallique, par rapport à sa vitesse lorsque les moyens de sciage scient les faces extérieures de ladite section.

Selon une variante de réalisation de l'invention, l'unité de commande est configurée pour que la vitesse de déplacement de la bande de serrage soit plus grande, de sa position initiale vers sa position finale, par rapport à sa vitesse de déplacement de sa position finale vers sa position initiale. Le sciage en plusieurs tronçons, d'une section métallique extrudée et profilée maintenue par la bande de serrage, est alors réalisé nettement plus rapidement par rapport à l'état de la technique.

Selon une autre variante de réalisation de l'invention, le poste de sciage automatisé comporte des moyens de maintien de la section métallique, au niveau de l'entrefer, l'unité de commande pilotant les moyens de maintien. Les moyens de maintien sont configurés pour que les spires de la section métallique soient alignées selon l'axe principal A-A' au niveau de l'entrefer.

Selon une autre variante de réalisation de l'invention, le poste de sciage automatisé comporte des moyens de mise sous tension mécanique des spires de la section métallique maintenue par les moyens de maintien, l'unité de commande pilotant les moyens de mise sous tension mécanique. De préférence, les moyens de mise sous tension mécanique comprennent des doigts pousseurs exerçant une pression mécanique sur les extrémités de la section métallique, de sorte à bander les spires afin de favoriser un alignement des spires selon l'axe principal A-A' de la bande de serrage.

Selon une autre variante de réalisation de l'invention, le poste de sciage automatisé comporte des moyens de mise en vibration de la bande de serrage, l'unité de commande pilotant les moyens de mise en vibration. De façon avantageuse, les moyens de mise en vibration permettent d'uniformiser le diamètre des spires de la section métallique présente dans la bande de serrage.

Selon une autre variante de réalisation de l'invention, le poste de sciage automatisé comporte des moyens de déplacement des bords opposés de la bande de serrage, de sorte à agrandir ou rétrécir l'entrefer, l'unité de commande pilotant les moyens de déplacement.

Selon une autre variante de réalisation de l'invention, le poste de sciage automatisé comporte une unité de soufflage, agencée de manière à permettre le retrait des résidus de sciage et/ou de brossage présents au niveau des bords sciés des tronçons, l'unité de commande pilotant l'unité de soufflage. De préférence, l'unité de soufflage est agencée entre les moyens de sciage et les moyens de brossage.

Bien entendu, les différentes caractéristiques, variantes et formes de réalisation mentionnées ci-dessus peuvent être associées les unes avec les autres selon diverses combinaisons, dans la mesure où elles ne sont pas incompatibles ou exclusives les unes des autres.

La présente invention concerne également un procédé de sciage de jantes de roue, mis en œuvre par un poste de sciage automatisé décrit ci-dessus, comprenant les étapes suivantes :
a) déplacement en position de repos des moyens de sciage ;
b) positionnement de la bande de serrage de sa position initiale à sa position finale, la bande de serrage maintenant une section métallique extrudée et profilée, comportant une pluralité d'enroulements sous forme de spires alignées, selon l'axe principal A-A' de cintrage de la bande de serrage ;
c) déplacement en position de travail des moyens de sciage ;
d) déplacement de la bande de serrage de sa position finale à sa position initiale, de sorte que les moyens de sciage scient un côté de la section métallique, pour former plusieurs tronçons de jante de roue.

Selon une autre variante de réalisation de l'invention, le procédé de sciage comprend les étapes suivantes :
a) déplacement en position de repos des moyens de sciage et des moyens de brossage ;
b) positionnement de la bande de serrage de sa position initiale à sa position finale, la bande de serrage maintenant une section métallique profilée, comportant une pluralité d'enroulements sous forme de spires alignées, selon l'axe principal A-A' de cintrage de la bande de serrage ;
c) déplacement en position de travail des moyens de sciage et des moyens de brossage ;
d) déplacement de la bande de serrage de sa position finale vers sa position initiale, de sorte que les moyens de sciage scient un côté de la section métallique profilée pour former plusieurs tronçons de jante de roue, et en ce que les moyens de brossage brossent les faces sciées des tronçons.

Selon une autre variante de réalisation de l'invention, le procédé de sciage met en œuvre une étape de mise en vibration mécanique de la bande de serrage, de sorte à favoriser un diamètre identique ou sensiblement identique entre les spires formées par une section métallique présente dans la bande de serrage. De préférence, cette étape de mise en vibration mécanique est réalisée avant l'étape de sciage mentionnée ci-dessus.

Selon une autre variante de réalisation de l'invention, le procédé de sciage met en œuvre une étape de soufflage, de manière à retirer les résidus de sciage et/ou de brossages présents au niveau des bords sciés des tronçons. De préférence, cette étape de soufflage est réalisée entre l'étape de sciage et l'étape de brossage mentionnées ci-dessus.

Selon une autre variante de réalisation de l'invention, le procédé de sciage met en œuvre une étape de maintien des spires de la section métallique au niveau de l'entrefer de la bande de serrage, pour que les spires soient alignées au niveau de l'entrefer, selon une direction parallèle ou sensiblement parallèle à l'axe principal A-A'. De préférence, cette étape de maintien est réalisée avant l'étape de mise en vibration mécanique de la section métallique mentionnée ci-dessus.

Selon une autre variante de réalisation de l'invention, le procédé de sciage met en œuvre une étape de rétrécissement de l'entrefer pour assurer un meilleur maintien de la section métallique par la bande de serrage. De préférence, cette étape de rétrécissement de l'entrefer est mise en œuvre entre l'étape de mise en vibration mécanique de la bande de serrage et l'étape de sciage de la section métallique.

Selon une autre variante de réalisation de l'invention, le procédé de sciage met en œuvre une étape d'écartement de l'entrefer, entre l'étape de sciage et l'étape de brossage mentionnée ci-dessus, afin de faciliter le brossage des bords sciés des tronçons par les moyens de brossage.

### DESCRIPTION DES FIGURES

La description qui va suivre en regard des dessins annexés suivants, donnés à titre d'exemples non limitatifs, permettra de mieux comprendre en quoi consiste l'invention et comment elle peut être réalisée :
- la figure 1 représente une vue de face d'un poste de sciage automatisé selon l'invention, en position initiale ;
- la figure 2 représente une coupe longitudinale du poste de sciage illustré par la figure 1 ;
- la figure 3 représente une vue de face d'un poste de sciage automatisé selon l'invention, lorsque les bras pivotants du poste de sciage sont abaissés contre les spires d'une section métallique maintenue par la bande de serrage ;
- la figure 4 représente une coupe longitudinale du poste de sciage automatisé illustré par la figure 1, lorsque la bande de serrage est en position finale et les moyens de sciage et de brossage sont en position de repos ;
- la figure 5 représente une vue de face d'un poste de sciage automatisé illustré par la figure 4, lorsque des doigts pousseurs mettent en tension les spires d'une section métallique maintenue par la bande de serrage ;
- la figure 6 représente une vue de face d'un poste de sciage automatisé selon l'invention, lorsque les doigts pousseurs sont en retrait et la bande de serrage est resserrée ;
- la figure 7 représente une vue de face d'un poste de sciage automatisé selon l'invention, en position finale, lorsque les moyens de sciage et les moyens de brossage sont en position de travail ;
- la figure 8 représente une coupe longitudinale du poste de sciage automatisé illustré par la figure 7 ;
- la figure 9 représente une coupe longitudinale du poste de sciage automatisé selon l'invention, lorsque la bande de serrage se déplace en direction de sa position initiale et passe au niveau des moyens de sciage ;
- la figure 10 représente une coupe longitudinale du poste de sciage automatisé selon l'invention, lorsque la bande de serrage se déplace en direction de sa position initiale et passe au niveau des moyens de brossage.

### DESCRIPTION DETAILLEE D'UN EXEMPLE DE REALISATION

Pour rappel, la présente invention propose un poste de sciage automatisé, pour la mise en œuvre d'un procédé sciage, permettant d'obtenir à partir d'une section métallique extrudée et profilée, comportant une pluralité d'enroulements sous forme de spires alignées, des tronçons de jantes dont les faces sciées présentent une coupe plus nette.

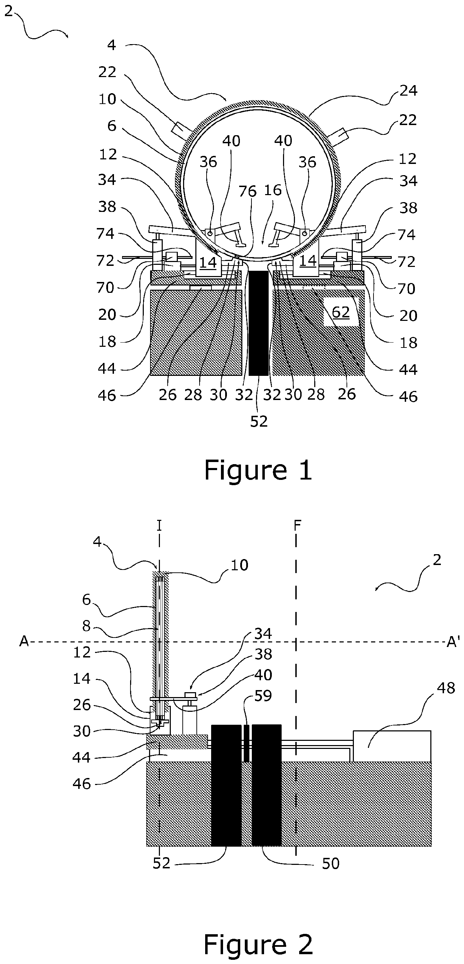

Selon un mode de réalisation non limitatif de l'invention, un poste de sciage automatisé 2 comprend une bande de serrage 4 ou feuillard, permettant de maintenir une section métallique 6 profilée, comportant une pluralité d'enroulements sous forme de spires 8 alignées. Comme illustré par les figures 1 et 2, la bande de serrage 4 est composée d'une plaque 10 métallique cintrée en forme de «C» autour d'un axe principal A-A'. Le rayon intérieur de cintrage de la plaque 10 est similaire au rayon extérieur des tronçons de jante que l'on souhaite obtenir. Selon le présent exemple, le rayon intérieur de la bande de serrage est compris entre 20 cm et 40 cm. La hauteur de la bande de serrage, définie selon l'axe principal A-A', est supérieure à la hauteur de la section métallique profilée, afin de permettre un serrage homogène de cette dernière. Selon le présent exemple, la hauteur de la bande de serrage est de l'ordre de 20 cm. Les bords 12 opposés de la plaque 10 sont maintenus à distance, par l'intermédiaire de deux supports 14 distincts, afin de délimiter un entrefer 16 ou passage. Chaque support 14 se déplace le long d'un rail 18 orienté perpendiculairement par rapport à l'axe principal A-A'. Les rails 18 sont alignés afin de permettre un écartement des bords 12 de la plaque 10, de façon symétrique par rapport à l'axe principal A-A', grâce à l'intermédiaire des supports 14. Pour cela, chaque support 14 est déplacé par un ensemble cylindre-piston 20 permettant d'élargir ou de resserrer le rayon de cintrage de la bande de serrage 4. Les ensembles cylindre-piston 20 sont solidaires des supports 14, de sorte que les pistons sont configurés pour pousser les supports de façon symétrique en direction de l'axe principal A-A'. En position resserrée, l'écart entre les bords 12 de la plaque 10 est réduit afin d'assurer un parfait maintien de la section métallique 6 par la bande de serrage 4. En position écartée, les ensembles cylindre-piston 20 permettent aux bords 12 de la plaque 10 de s'écarter pour faciliter le retrait des tronçons sciés. La bande de serrage 4 délimite donc un cylindre ouvert le long de l'axe principal A-A', entre les bords 12 de la plaque 10 délimitant un entrefer 16.

La bande de serrage 4 comporte également plusieurs dispositifs de vibration mécanique 22, maintenus sur la face externe 24 de la plaque 10. La fonction des dispositifs de vibration 22 mécanique est décrite ci-dessous.

Chaque support 14 est muni de bras 26 maintenant une table 28. Les tables 28 sont positionnées afin que leur face supérieure 30 soit parallèle à l'axe principal A-A', ainsi que tangente à une pluralité d'enroulement d'une section métallique 6 maintenue par la bande de serrage 4. Les tables comportent des bords 32 en vis-à-vis et parallèles à l'axe principal A-A'. En position resserrée, l'écart entre les bords 32 des tables 28 est suffisant pour permettre au niveau de l'entrefer 16 la mise en œuvre d'une opération de sciage décrite ci-dessous.

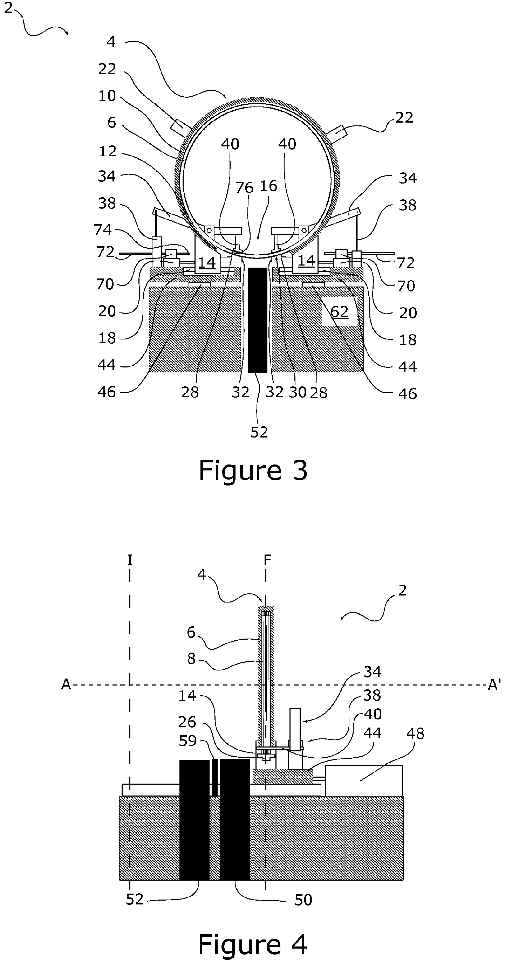

Chaque support 14 de la bande de serrage 4 comprend également un bras pivotant 34, autour d'un arbre 36 parallèle à l'axe principal A-A'. Les bras pivotants 34 basculent entre une position relevée illustrée par la figure 1, et une position abaissée illustrée par la figure 3. Le basculement de chaque bras pivotant 34 est contrôlé par un ensemble cylindre-piston 38 dédié. Chaque bras pivotant comporte à une extrémité une plaque d'appui 40, dont une surface d'appui est parallèle à l'axe principal A-A'. En position abaissée, le profil de la surface d'appui est configuré pour maintenir, contre une table 28, la pluralité d'enroulement d'une section métallique maintenue par la bande de serrage 4. La pression exercée par chaque bras pivotant est configurée pour que la plaque d'appui 40 n'endommage pas la surface de la section métallique 6, tout en permettant un maintien des enroulements contre la table 28.

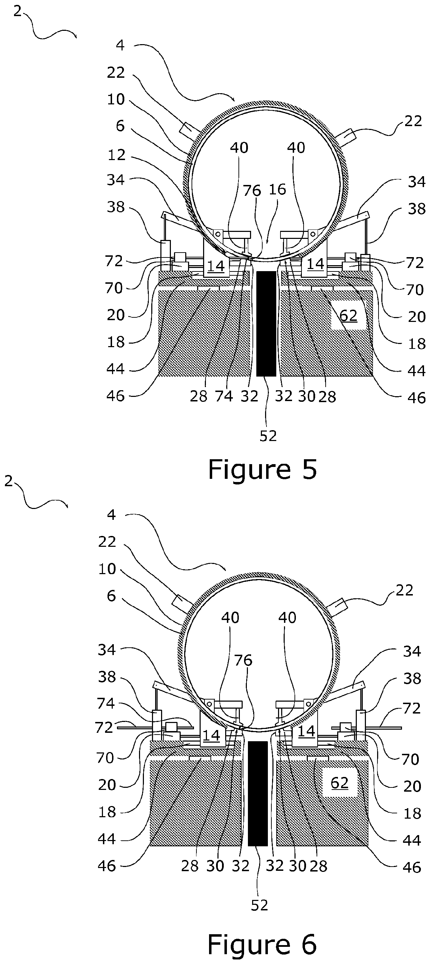

Selon une particularité de l'invention, chaque rail 18 supportant un support 14 est monté sur un chariot 44, mobile le long d'une glissière 46. Chaque chariot 44 comporte un ensemble cylindre-piston 70, configuré pour déplacer un doigt pousseur 72 selon une direction parallèle au rail 18. Les doigts pousseurs sont positionnés au niveau de l'entrefer 16 et décalés l'un par rapport à l'autre selon l'axe principal A-A', afin de permettre à leur extrémité 74 d'exercer une pression sur les extrémités 76 opposées d'une section métallique 6 positionnée dans la bande de serrage (voir figures 3 et 5).

Les glissières 46 sont agencées parallèlement à l'axe principal A-A'. Les chariots 44 sont déplacés de façon synchronisée, par l'intermédiaire de moyens de motorisation 48 connus, entre une position initiale I et une position finale F respectivement illustrées par les figures 2 et 4. Les moyens de motorisation 48 sont configurés pour contrôler la vitesse de déplacement de la bande de serrage 4 entre les positions initiale et finale des chariots 44. Les glissières sont écartées d'une distance suffisante pour permettre la présence d'une scie circulaire 50 et d'un moyen de brossage 52. La scie circulaire 50 est présente entre les positions initiale et finale des chariots 44. Le moyen de brossage 52 est présent entre la position initiale I des chariots 44 et la scie circulaire 50 (voir figure 2).

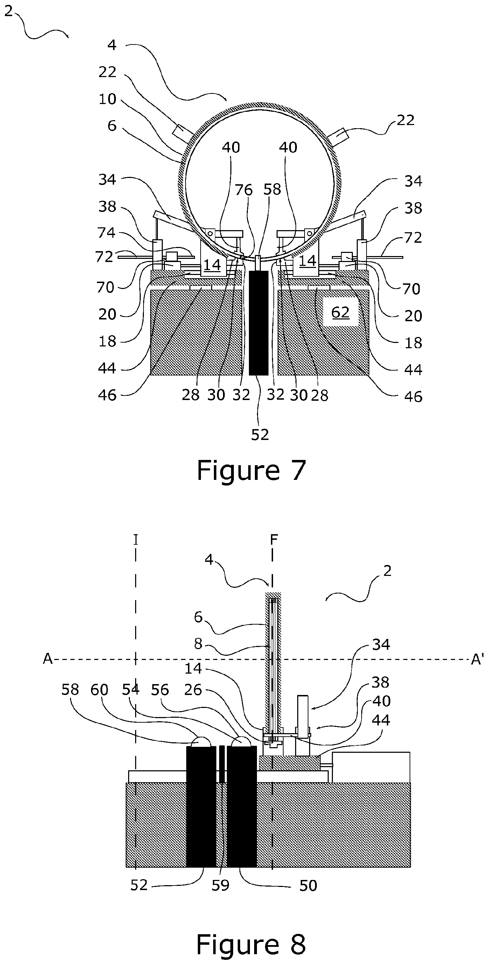

La scie circulaire 50 comprend une unité élévatrice non représentée, configurée pour translater une lame 54 de la scie circulaire, entre une position de repos illustrée par la figure 4 et une position de travail illustrée par la figure 8. En position de repos R, le fil 56 de la lame 54 est situé en dessous du niveau des bords 12 de la plaque 10. En position de travail T, le fil 56 de la lame est aligné avec l'axe principal A-A' et centré entre les tables 28. L'épaisseur de la lame 54, définie selon une direction perpendiculaire à l'axe principal A-A', est inférieure à l'écart entre les bords des tables 28, lorsque la bande de serrage est en position resserrée. Selon le présent exemple, l'épaisseur de la lame 54 est de l'ordre de 2 mm. Le diamètre de la lame 54 est choisi pour qu'en position de travail, la scie circulaire 50 n'entrave pas le déplacement de la bande de serrage 4 de la position finale F à la position initiale I des chariots 44. Le diamètre de la lame 54 est également choisi pour permettre le sciage d'une pluralité d'enroulements formée par une section métallique 6 maintenue par la bande de serrage 4. Selon le présent exemple, le diamètre de la lame 54 est de l'ordre de 275 mm.

Le moyen de brossage 52 est également monté sur une unité élévatrice non représentée, configurée pour translater un disque de brossage 58 entre une position de repos R illustrée par la figure 4 et une position de travail T illustrée par la figure 8. En position de repos R, la périphérie 60 du disque de brossage 58 est située en dessous du niveau des bords 12 de la plaque 10. En position de travail T, le disque de brossage 58 est aligné avec l'axe principal A-A' et centré entre les tables 28 (voir figure 7). L'épaisseur du disque de brossage 58, définie selon une direction perpendiculaire à l'axe principal A-A', est inférieure à l'écart entre les tables 28, lorsque la bande de serrage est en position écartée. Selon le présent exemple, l'épaisseur du disque de brossage 58 est de l'ordre de 25 mm. Le diamètre du disque de brossage 58 est choisi pour qu'en position de travail, le moyen de brossage n'entrave pas le déplacement de la bande de serrage 4, tout en permettant le brossage des bords des tronçons de jante sciés. Selon le présent exemple, le diamètre du disque de brossage 58 est de l'ordre de 275 mm.

Selon l'invention, en position de travail, la lame 54 de la scie circulaire et le disque de brossage 58 sont alignés dans un même plan parallèle à l'axe principal A-A', passant à équidistance des bords 12 de la bande de serrage 4.

Comme illustré par la figure 2, le poste de sciage automatisé 2 comporte également une unité de soufflage 59, agencée entre la scie circulaire 50 et le moyen de brossage 52. L'unité de soufflage 59 est positionnée de sorte à permettre l'émission d'un flux d'air au niveau de l'entrefer 16, selon une direction tangentielle ou sensiblement tangentielle aux tronçons sciés, pour permettre le retrait des résidus de sciages présents sur lesdits tronçons. Bien entendu, l'unité de soufflage 59 est placée légèrement en retrait de la bande de serrage, de sorte à ne pas gêner son déplacement entre sa position initiale et sa position finale.

Les actionneurs décrits ci-dessus sont pilotés par une unité de commande 62, permettant de coordonner leur fonctionnement afin de mettre en œuvre le procédé de sciage décrit ci-dessous.

Selon une première étape dite d'initialisation, l'unité de commande 62 s'assure que :
- les chariots 44 occupent leur position initiale I sur les glissières 46 ;
- la bande de serrage 4 est en position écartée ;
- les bras pivotants 34 sont en position relevée ;
- la scie circulaire 50 et le moyen de brossage 52 sont en position de repos R.

Selon une deuxième étape dite de chargement, illustrée par les figures 1 et 2, un opérateur ou un automate positionne une section métallique 6 extrudée et profilée dans la bande de serrage 4, comportant une pluralité d'enroulements sous forme de spires alignées selon l'axe principal A-A'. Il est à noter que les extrémités 76 de la section métallique 6 sont positionnées de sorte à être en vis-à-vis ou sensiblement en vis-à-vis, des extrémités 74 des doigts pousseurs XX mentionnés ci-dessus (voir figure 1).

Selon une troisième étape dite de mise en place, illustrée par les figures 3 et 4, les chariots 44 sont déplacés jusqu'à leur position finale F et les bras pivotants 34 sont abaissés de sorte que leur plaque d'appui 40 entre en contact avec les spires 8. Les ensembles cylindre-piston 38 sont en position neutre afin d'exercer une légère pression sur les spires 8, pour s'assurer que chaque spire 8 est en contact avec les tables 28. Ainsi, toutes les spires 8 sont placées au même niveau par rapport à l'entrefer 16.

Selon une quatrième étape dite de mise sous tension des spires de la section métallique, illustrée par la figure 5, les ensembles cylindre-piston 70 déplacent les doigts pousseurs 72 en direction de l'entrefer 16, afin que les extrémités 74 des doigts pousseurs exercent une pression sur les extrémités 76 de la section métallique 6. La pression exercée par les doigts pousseur 72 favorise un alignement des spires 8 selon l'axe principal A-A' de la bande de serrage 4.

Selon une cinquième étape dite d'ajustement des spires de la section métallique, les dispositifs de vibration 22 mécanique sont activés pendant quelques secondes, de sorte à favoriser un diamètre identique ou sensiblement identique entre les spires 8 formées par la section métallique 6.

De préférence, l'étape de mise sous tension et l'étape d'ajustement des spires de la section métallique sont réalisées lorsque les chariots 44 sont dans leur position finale F. Selon une variante de réalisation non représentée, ces deux étapes peuvent être mises en œuvre lors du déplacement des chariots 44, entre leur position initiale I et leur position finale F. Cette variante de réalisation permet avantageusement de réduire le temps du procédé de sciage ici décrit.

Selon une sixième étape dite de maintien, les ensembles cylindre-piston 38 sont mis sous pression, de sorte que les plaques d'appui 40 des bras pivotants 34 maintiennent fermement chaque spire contre les tables 28. Les pistons des ensembles cylindre-piston 20 sont également déployés afin que la bande de serrage 4 soit en position resserrée autour de la section métallique 6 profilée. Les ensembles cylindre-piston 70 rétractent les doigts pousseurs 72, afin que les extrémités 74 des doigts pousseurs libèrent la pression qu'ils exercent sur les extrémités 76 de la section métallique 8 (voir figure 6).

Selon une septième étape dite d'élévation, illustrée par les figures 7 et 8, la scie circulaire 50 et le moyen de brossage 52 sont déplacés en position de travail T et mis en marche.

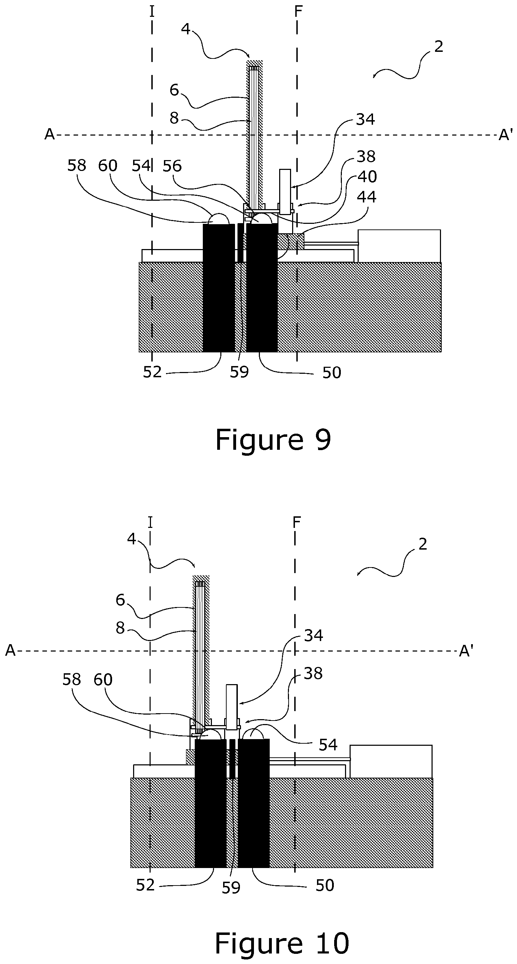

Selon une huitième étape dite de sciage, illustrée par la figure 9, les chariots 44 déplacent la bande de serrage 4 au-delà de la scie circulaire 50, de sorte à permettre le sciage des spires formées par la section métallique 6 au niveau de l'entrefer 16.

Selon une neuvième étape dite de soufflage, non illustrée, les pistons des ensembles cylindre-piston 20 sont rétractés afin que la bande de serrage 4 soit en position écartée lorsqu'elle passe au niveau des moyens de soufflage 59. L'étape de soufflage permet de retirer les résidus de sciage, à l'aide d'un flux d'air se propageant selon une direction sensiblement tangentielle au niveau des bords de chaque tronçon scié.

Selon une dixième étape dite de brossage, illustrée par la figure 10, les chariots 44 déplacent la bande de serrage 4 en direction de sa position initiale, au-delà du moyen de brossage 52, de sorte à permettre un brossage fin et uniforme des bords de chaque tronçon scié par l'intermédiaire du disque de brossage 58.

Selon une onzième étape dite de retrait, les chariots 44 déplacent la bande de serrage 4 dans sa position initiale I comme illustrée par la figure 1, afin qu'un opérateur ou un automate puisse retirer les tronçons de jantes, après que les bras pivotants 34 aient été relevés pour libérer lesdits tronçons.

Selon une variante de réalisation, lors de la septième étape dite de sciage, l'unité de commande ralentit la vitesse de déplacement des chariots 44, lorsque les faces extérieures de la section métallique 6 profilée sont sciées, afin de réduire le risque de pliage des faces extérieures par la lame de la scie circulaire. Par les termes « faces extérieures », on entend les faces délimitant la section métallique qui sont normales ou sensiblement normales à l'axe principal A-A'. Selon une autre variante de réalisation préférée, l'unité de commande augmente la vitesse de déplacement des chariots 44 entre les faces extérieures de la section métallique 6 profilée. Ce mode de réalisation permet avantageusement de réduire le temps de sciage de la section métallique 6 profilée. Selon une autre variante de réalisation, l'unité commande déplace la bande de serrage 4 à une vitesse supérieure lorsqu'elle se déplace entre sa position initiale et sa position finale, par rapport à la vitesse de déplacement de la bande de serrage entre sa position finale et sa position initiale.

## Revendications

1. Poste de sciage automatisé (2) de jantes de roue comprenant :
- une bande de serrage (4) cintrée en forme de « C » autour d'un axe principal A-A', de sorte que les bords (12) opposés de la bande de serrage (4) délimitent un entrefer (16), la bande de serrage (4) étant apte à maintenir une section métallique (6) extrudée et profilée, comportant une pluralité d'enroulements sous forme de spires (8) alignées selon l'axe principal A-A' ; et
- des moyens de déplacement (44, 46, 48) de la bande de serrage (4), le long d'une trajectoire parallèle à l'axe principal A-A', entre une position initiale (I) et une position finale (F) ; et
- des moyens de sciage (50) aptes à scier la section métallique (6) ; et
- des moyens de déplacement des moyens de sciage (50), selon une direction perpendiculaire ou sensiblement perpendiculaire à l'axe principal A-A', entre :
∘ une position de repos (R), dans laquelle les moyens de sciage (50) sont en retrait de la trajectoire de l'entrefer (16); et
∘ une position de travail (T), dans laquelle les moyens de sciage (50) sont présents entre la position initiale (I) et la position finale (F) de la bande de serrage (4), et présents sur la trajectoire de l'entrefer (16) ; et
- une unité de commande (62) configurée pour piloter les moyens de déplacement (44, 46, 48) et les moyens de sciage (50), de sorte à permettre :
▪ le positionnement de la bande de serrage (4) en position initiale (I) ;
▪ le positionnement des moyens de sciage (50) en position de repos (R) ;
▪ le déplacement de la bande de serrage (4) de sa position initiale (I) à sa position finale (F) ;
▪ le déplacement en position de travail (T) des moyens de sciage (50) ;
▪ le déplacement de la bande de serrage (4) de sa position finale (F) à sa position initiale (I).

2. Poste de sciage automatisé (2) selon la revendication précédente, **caractérisé en ce qu'**il comprend des moyens de brossage (52) et des moyens de déplacement des moyens de brossage pilotés par l'unité de commande (62), les moyens de déplacement étant aptes à déplacer les moyens de brossage (52) selon une direction perpendiculaire ou sensiblement perpendiculaire à l'axe principal A-A', entre :
∘ une position de repos (R), dans laquelle les moyens de brossage (52) sont en retrait de la trajectoire de l'entrefer (16) ; et
∘ une position de travail (T), dans laquelle les moyens de brossage (52) sont présents entre la position initiale (I) et la position finale (F) de la bande de serrage (4), et présents sur la trajectoire de l'entrefer (16).

3. Poste de sciage automatisé (2) selon la revendication 1 ou 2, **caractérisé en ce que** l'unité de commande (62) est configurée pour ralentir la vitesse de déplacement de la bande de serrage (4), lorsque les moyens de sciage (50) scient les faces extérieures d'une section métallique (6) maintenue par ladite bande de serrage (4).

4. Poste de sciage automatisé (2) selon l'une des revendications 1 à 3, **caractérisé en ce que** l'unité de commande (62) est configurée pour accélérer la vitesse de déplacement de la bande de serrage (4), lorsque les moyens de sciage (50) scient une section métallique (6), maintenue par ladite bande de serrage (4), entre les faces extérieures de ladite section.

5. Poste de sciage automatisé (2) selon l'une des revendications 1 à 4, **caractérisé en ce que** l'unité de commande (62) est configurée pour que la vitesse de déplacement de la bande de serrage (4) soit plus grande, de sa position initiale vers sa position finale, par rapport à sa vitesse de déplacement de sa position finale vers sa position initiale.

6. Poste de sciage automatisé (2) selon l'une des revendications 1 à 5, **caractérisé en ce qu'**il comporte des moyens de maintien (30, 40) de la section métallique (6), au niveau de l'entrefer (16), l'unité de commande (62) pilotant les moyens de maintien (30, 40).

7. Poste de sciage automatisé (2) selon la revendication 6, **caractérisé en ce qu'**il comporte des moyens de mise sous tension mécanique (70, 72, 74) des spires (8) de la section métallique (6), maintenue par les moyens de maintien (30, 40), l'unité de commande (62) pilotant les moyens de mise sous tension mécanique (70, 72, 74).

8. Poste de sciage automatisé (2) selon l'une des revendications 1 à 7, **caractérisé en ce qu'**il comporte des moyens de mise en vibration (22) de la bande de serrage (4), l'unité de commande (62) pilotant les moyens de mise en vibration (22).

9. Poste de sciage automatisé (2) selon l'une des revendications 1 à 8, **caractérisé en ce qu'**il comprend des moyens de déplacement (14, 18, 20) des bords (12) opposés de la bande de serrage (4), de sorte à agrandir ou rétrécir l'entrefer (16), l'unité de commande (62) pilotant les moyens de déplacement (14, 18, 20).

10. Poste de sciage automatisé (2) selon l'une des revendications 1 à 9, **caractérisé en ce qu'**il comprend une unité de soufflage (59), agencée de manière à permettre le retrait des résidus de sciage et/ou de brossage présents au niveau des bords (12) sciés des tronçons, l'unité de commande (62) pilotant l'unité de soufflage (59).

11. Procédé de sciage de jantes de roue, mis en œuvre par un poste de sciage automatisé (2) selon l'une des revendications 1 à 10, comprenant les étapes suivantes :
a) déplacement en position de repos (R) des moyens de sciage (50) ;
b) positionnement de la bande de serrage (4) de sa position initiale (I) à sa position finale (F), la bande de serrage (4) maintenant une section métallique (6) extrudée et profilée, comportant une pluralité d'enroulements sous forme de spires (8) alignées selon l'axe principal A-A' de cintrage de la bande de serrage (4) ;
c) déplacement en position de travail (T) des moyens de sciage (50) ;
d) déplacement de la bande de serrage (4) de sa position finale (F) à sa position initiale (I), de sorte que les moyens de sciage (50) scient un côté de la section métallique (6) pour former plusieurs tronçons de jantes de roue.

12. Procédé de sciage de jantes de roue, mis en œuvre par un poste de sciage automatisé (2) selon l'une des revendications 2 à 11, comprenant les étapes suivantes :
a) déplacement en position de repos (R) des moyens de sciage (50) et des moyens de brossage (52) ;
b) positionnement de la bande de serrage (4) de sa position initiale (I) à sa position finale (F), la bande de serrage (4) maintenant une section métallique (6) extrudée et profilée, comportant une pluralité d'enroulements sous forme de spires (8) alignées selon l'axe principal A-A' de cintrage de la bande de serrage (4) ;
c) déplacement en position de travail (T) des moyens de sciage (50) et des moyens de brossage (52) ;
d) déplacement de la bande de serrage (4) de sa position finale (F) vers sa position initiale (I), de sorte que les moyens de sciage (50) scient un côté de la section métallique (6) profilée pour former plusieurs tronçons de jantes de roue, et en ce que les moyens de brossage (52) brossent les faces sciées des tronçons.

13. Procédé de sciage de jantes de roue selon la revendication 11 ou 12, mettant en œuvre une étape de mise en vibration mécanique de la bande de serrage (4) de sorte à favoriser un diamètre identique ou sensiblement identique entre les spires (8) formées par une section métallique (6) présente dans la bande de serrage (4).

14. Procédé de sciage de jantes de roue selon l'une des revendications 11 à 13, mettant en œuvre une étape de soufflage, de manière à retirer les résidus de sciage et/ou de brossage présents au niveau des bords (12) sciés des tronçons.

15. Procédé de sciage de jantes de roue selon l'une des revendications 11 à 14, mettant en œuvre une étape de maintien des spires de la section métallique au niveau de l'entrefer (16) de la bande de serrage (4), pour que les spires (8) soient alignées au niveau de l'entrefer (16), selon une direction parallèle ou sensiblement parallèle à l'axe principal A-A'.

## Patentansprüche

1. Automatisierte Station (2) zum Absägen von Radfelgen mit
- einem in Form eines "C" um eine Hauptachse A-A' so gebogenen Klemmband (4), daß die gegenüberliegenden Ränder (12) des Klemmbands (4) einen Spalt (16) begrenzen, wobei das Klemmband (4) dazu ausgelegt ist, einen metallenen extrudierten und profilierten Abschnitt (6) festzuhalten, der eine Anzahl Wicklungen in Form von entlang der Hauptachse A-A' ausgerichteten Windungen (8) aufweist, und
- Mitteln (44, 46, 48) zum Verlagern des Klemmbands (4) entlang eines zur Hauptachse A-A' parallelen Wegs zwischen einer Anfangsposition (I) und einer Endposition (F), und
- Sägemitteln (6), die geeignet sind, den metallenen Abschnitt (6) zu zersägen, und
- Mitteln (50) zum Verlagern der Sägemittel entlang einer zur Hauptachse A-A' senkrechten oder im Wesentlichen Richtung zwischen
= einer Ruheposition (R), in der die Sägemittel (50) gegenüber dem Verlauf des Spalts (16) zurückgezogen sind, und
= einer Arbeitsposition (T), in der sich die Sägemittel (50) zwischen der Anfangsposition (I) und der Endposition (F) des Klemmbands (4) und auf dem Verlauf des Spalts (16) befinden, und
- einer Steuerungseinheit (62), die dazu ausgelegt ist, die Verlagerungsmittel (44, 46, 48) und die Sägemittel (50) zu steuern, um
= das Positionieren des Klemmbands (4) in der Anfangsposition (I),
= das Positionieren der Sägemittel (50) in der Ruheposition (R),
= das Verlagern des Klemmbands (4) von dessen Anfangsposition (I) zu dessen Endposition (F),
= das Verlagern der Sägemittel (50) in die Arbeitsposition (T),
= das Verlagern des Klemmbands (4) von dessen Endposition (F) zur Anfangsposition (I)
zu ermöglichen.

2. Automatisierte Station (2) zum Absägen gemäß dem vorangehenden Anspruch, **dadurch gekennzeichnet, daß** sie Mittel zum Bürsten (52) und von der Steuerungseinheit (62) gesteuerte Mittel zum Verlagern der Mittel zum Bürsten aufweist, wobei die Verlagerungsmittel dazu ausgelegt sind, die Mittel zum Bürsten (52) in einer zur Hauptachse A-A' senkrechten oder im Wesentlichen senkrechten Richtung zwischen
- einer Ruheposition (R), in der die Mittel zum Bürsten (52) gegenüber dem Verlauf des Spalts (16) zurückgezogen sind, und
- einer Arbeitsposition (T), in der sich die Mittel zum Bürsten (52) zwischen der Anfangsposition (I) und der Endposition (F) des Klemmbands (4) und auf dem Verlauf des Spalts (16) befinden.

3. Automatisierte Station (2) zum Absägen gemäß Anspruch 1 oder 2, **dadurch gekennzeichnet, daß** die Steuerungseinheit (62) dazu ausgelegt ist, die Verlagerungsgeschwindigkeit des Klemmbands (4) zu verringern, wenn die Sägemittel (50) die Außenseiten eines vom Klemmband (4) festgehaltenen metallenen Abschnitts (6) absägen.

4. Automatisierte Station (2) zum Absägen gemäß einem der Ansprüche 1 bis 3, **dadurch gekennzeichnet, daß** die Steuerungseinheit (62) dazu ausgelegt ist, die Verlagerungsgeschwindigkeit des Klemmbands (4) zu erhöhen, wenn die Sägemittel (50) einen vom Klemmband (4) festgehaltenen metallenen Abschnitt (6) zwischen den Außenseiten des Abschnitts absägen.

5. Automatisierte Station (2) zum Absägen gemäß einem der Ansprüche 1 bis 4, **dadurch gekennzeichnet, daß** die Steuerungseinheit (62) so ausgelegt ist, daß die Verlagerungsgeschwindigkeit des Klemmbands (4) von der Anfangsposition zur Endposition größer ist als die Verlagerungsgeschwindigkeit von der Endposition zur Anfangsposition.

6. Automatisierte Station (2) zum Absägen gemäß einem der Ansprüche 1 bis 5, **dadurch gekennzeichnet, daß** sie Mittel (30, 40) zum Festhalten des metallenen Abschnitts (6) im Bereich des Spalts (16) aufweist, wobei die Steuerungseinheit (62) die Festhaltemittel (30, 40) steuert.

7. Automatisierte Station (2) zum Absägen gemäß Anspruch 6, **dadurch gekennzeichnet, daß** sie Mittel (70, 72, 74) zum mechanischen Spannen der Windungen (8) des von den Festhaltemitteln (30, 40) festgehaltenen metallenen Abschnitts (6) aufweist, wobei die Steuerungseinheit (62) die Mittel (70, 72, 74) zum mechanischen Spannen steuert.

8. Automatisierte Station (2) zum Absägen gemäß einem der Ansprüche 1 bis 7, **dadurch gekennzeichnet, daß** sie Mittel (22) zum in Schwingung Versetzen des Klemmbands (4) aufweist, wobei die Steuerungseinheit (62) die Mittel (22) zum in Schwingung Versetzen steuert.

9. Automatisierte Station (2) zum Absägen gemäß einem der Ansprüche 1 bis 8, **dadurch gekennzeichnet, daß** sie Mittel (14, 18, 20) zum Verlagern der einander gegenüberliegenden Ränder (12) des Klemmbands (4) aufweist, um den Spalt (16) zu vergrößern oder zu verkleinern, wobei die Steuerungseinheit (62) die Verlagerungsmittel (14, 18, 20) steuert.

10. Automatisierte Station (2) zum Absägen gemäß einem der Ansprüche 1 bis 9, **dadurch gekennzeichnet, daß** sie eine Gebläseeinheit (59) aufweist, die dazu ausgelegt ist, ein Entfernen der an den abgesägten Rändern (12) der Abschnitte vorhandenen Säge- und/oder Bürstreste zu ermöglichen, wobei die Steuerungseinheit (62) die Gebläseeinheit (59) steuert.

11. Verfahren zum Absägen von Radfelgen, das von einer automatisierten Station (2) zum Absägen gemäß einem der Ansprüche 1 bis 10 durchgeführt wird und das die folgenden Schritte aufweist:
a) Verlagern der Sägemittel (50) in die Ruheposition (R),
b) Verlagern des Klemmbands (4) von dessen Anfangsposition (I) zu dessen Endposition (F), wobei das Klemmband (4) einen metallenen extrudierten und profilierten Abschnitt (6) festhält, der eine Anzahl Wicklungen in Form von entlang der Biegehauptachse A-A' des Klemmbands (4) ausgerichteten Windungen (8) aufweist,
c) Verlagern der Sägemittel (50) in die Arbeitsposition (T),
d) Verlagern des Klemmbands (4) von dessen Endposition (F) zu dessen Anfangsposition (I), damit die Sägemittel (50) eine Seite des metallenen Abschnitts (6) absägen, um mehrere Abschnitte von Radfelgen zu bilden.

12. Verfahren zum Absägen von Radfelgen, das von einer automatisierten Station (2) zum Absägen gemäß einem der Ansprüche 2 bis 11 durchgeführt wird und das die folgenden Schritte aufweist:
a) Verlagern der Sägemittel (50) und der Mittel zum Bürsten (52) in die Ruheposition (R),
b) Verlagern des Klemmbands (4) von dessen Anfangsposition (I) zu dessen Endposition (F), wobei das Klemmband (4) einen metallenen extrudierten und profilierten Abschnitt (6) festhält, der eine Anzahl Wicklungen in Form von entlang der Biegehauptachse A-A' des Klemmbands (4) ausgerichteten Windungen (8) aufweist,
c) Verlagern der Sägemittel (50) und der Mittel zum Bürsten (52) in die Arbeitsposition (T),
d) Verlagern des Klemmbands (4) von dessen Endposition (F) zu dessen Anfangsposition (I), damit die Sägemittel (50) eine Seite des metallenen Abschnitts (6) absägen, um mehrere Abschnitte von Radfelgen zu bilden, und die Mittel zum Bürsten (52) die abgesägten Seiten der Abschnitte bürsten.

13. Verfahren zum Absägen von Radfelgen gemäß Anspruch 11 oder 12, das einen Schritt des in mechanische Schwingung Versetzens des Klemmbands (4) durchführt, um einen gleichen oder im Wesentlichen gleichen Durchmesser der von einem im Klemmband (4) vorhandenen metallenen Abschnitt (6) gebildeten Windungen (8) zu fördern.

14. Verfahren zum Absägen von Radfelgen gemäß einem der Ansprüche 11 bis 13, das einen Schritt des Blasens durchführt, um die an den abgesägten Rändern (12) der Abschnitte vorhandenen Säge- und/oder Bürstreste zu entfernen.

15. Verfahren zum Absägen von Radfelgen gemäß einem der Ansprüche 11 bis 14, das einen Schritt des Festhaltens der Windungen des metallenen Abschnitts am Spalt (16) des Klemmbands (4) durchführt, damit die Windungen (8) am Spalt (16) in einer zur Hauptachse A-A' parallelen oder im Wesentlichen parallelen Richtung ausgerichtet sind.

## Claims

1. An automated wheel rim sawing station (2), comprising:
- a clamping band (4) that is C-curved about a main axis A-A' in such a way that the opposite edges (12) of the clamping band (4) delimit a gap (16), the clamping band (4) being capable of holding an extruded and profiled metal section (6), having a plurality of windings in the form of turns (8) aligned along the main axis A-A'; and
- means (44, 46, 48) for moving the clamping band (4) along a path parallel to the main axis A-A', between an initial position (I) and a final position (F); and
- sawing means (50) capable of sawing the metal section (6); and
- means for moving the sawing means (50) in a direction perpendicular or substantially perpendicular to the main axis A-A', between:
o a rest position (R), in which the sawing means (50) are setback with respect to the path of the gap (16); and
∘ a working position (T), in which the sawing means (50) are present between the initial position (I) and the final position (F) of the clamping band (4), and present on the path of the gap (16); and
- a control unit (62) configured to pilot the moving means (44, 46, 48) and the sawing means (50), in such a way as to allow:
• positioning the clamping band (4) at the initial position (I);
• positioning the sawing means (50) at the rest position (R);
• moving the clamping band (4) from its initial position (I) to its final position (F);
• moving the sawing means (50) to the working position;
• moving the clamping band (4) from its final position (F) to its initial position (I).

2. The automated sawing station (2) according to the previous claim, **characterized in that** it comprises brushing means (52) and means for moving the brushing means piloted by the control unit (62), the moving means being capable of moving the brushing means (52) in a direction perpendicular or substantially perpendicular to the main axis A-A', between:
∘ a rest position (R), in which the brushing means (52) are setback with respect to the path of the gap (16); and
∘ a working position (T), in which the brushing means (52) are present between the initial position (I) and the final position (F) of the clamping band (4), and present on the path of the gap (16).

3. The automated sawing station (2) according to claim 1 or 2, **characterized in that** the control unit (62) is configured to reduce the moving speed of the clamping band (4) when the sawing means (50) saw the outer faces of a metal section (6) held by said clamping band (4).

4. The automated sawing station (2) according to one of claims 1 to 3, **characterized in that** the control unit (62) is configured to increase the moving speed of the clamping band (4) when the sawing means (50) saw a metal section (6), held by said clamping band (4), between the outer faces of said section.

5. The automated sawing station (2) according to one of claims 1 to 4, **characterized in that** the control unit (62) is configured in such a way that the moving speed of the clamping band (4) is higher from its initial position to its final position than its moving speed from its final position to its initial position.

6. The automated sawing station (2) according to one of claims 1 to 5, **characterized in that** its includes means (30, 40) for holding the metal section (6), at the gap (16), the control unit (62) piloting the holding means (30, 40).

7. The automated sawing station (2) according to claim 6, **characterized in that** its includes means (70, 72, 74) for mechanically tensioning the turns (8) of the metal section (6) held by the holding means (30, 40), the control unit (62) piloting the mechanical tensioning means (70, 72, 74).

8. The automated sawing station (2) according to one of claims 1 to 7, **characterized in that** its includes means (22) for vibrating the clamping band (4), the control unit (62) piloting the vibrating mans (22).

9. The automated sawing station (2) according to one of claims 1 to 8, **characterized in that** its comprises means (14, 18, 20) for moving the opposite edges (12) of the clamping band (4), in such a way as to enlarge or shrink the gap (16), the control unit (62) piloting the moving means (14, 18, 20).

10. The automated sawing station (2) according to one of claims 1 to 9, **characterized in that** its comprises a blowing unit (59), arranged in such a way as to allow removing the sawing and/or brushing waste present at the sawed edges (12) of the segments, the control unit (62) piloting the blowing unit (59).

11. A wheel rim sawing method, implemented by an automated sawing station (2) according to one of claims 1 to 10, comprising the following steps:
a) moving the sawing means (50) to the rest position (R);
b) positioning the clamping band (4) from its initial position (I) to its final position (F), the clamping band (4) holding an extruded and profiled metal section (6), having a plurality of windings in the form of turns (8) aligned along the main curving axis A-A' of the clamping band (4);
c) moving the sawing means (50) to the working position (T);
d) moving the clamping band (4) from its final position (F) to its initial position (I), in such a way that the sawing means (50) saw one side of the metal section (6) to form several wheel rims segments.

12. The wheel rim sawing method, implemented by an automated sawing station (2) according to one of claims 2 to 11, comprising the following steps:
a) moving the sawing means (50) and the brushing means (52) to the rest position (R);
b) positioning the clamping band (4) from its initial position (I) to its final position (F), the clamping band (4) holding an extruded and profiled metal section (6), having a plurality of windings in the form of turns (8) aligned along the main curving axis A-A' of the clamping band (4);
c) moving the sawing means (50) and the brushing means (52) to the working position (T);
d) moving the clamping band (4) from its final position (F) to its initial position (I), in such a way that the sawing means (50) saw one side of the profiled metal section (6) to form several wheel rim segments and in that the brushing means (52) brush the sawed faces of the segments.

13. The wheel rim sawing method according to claim 11 or 12, implementing a step of mechanically vibrating the clamping band (4) in such a way as to favour an identical or substantially identical diameter between the turns (8) formed by a metal section (6) present in the clamping band (4).

14. The wheel rim sawing method according to one of claims 11 to 13, implementing a blowing step, in such a way as to remove the sawing and/or brushing waste present at the sawed edges (12) of the segments.

15. The wheel rim sawing method according to one of claims 11 to 14, implementing a step of holding the turns of the metal section at the gap (16) of the clamping band (4), in such a way that the turns (8) are aligned at the gap (16), in a direction parallel or substantially parallel to the main axis A-A'.
